# EUROPEAN PATENT APPLICATION

(11) **EP 0 582 369 A1**
(43) Date of publication of application: **09.02.1994**
(21) Application number: 93304205.3
(22) Date of filing: 28.05.1993
(51) Int. Cl.: G06K 15/12

(54) **Bit-map image resolution converter with controlled compensation for write-white xerographic laser printer**

(30) Priority: 28.05.1992 US 890064
(71) Applicant: XEROX CORPORATION, Rochester New York 14644 (US)
(72) Inventor: Mailloux, Louis D., Fairport, New York 14450 (US)
(74) Representative: Goode, Ian Roy

(57) **Abstract**

A method to enable the conversion of binary image data originally generated at a first resolution into representative binary image data of an integer-value magnified resolution. The method comprises repeating, for each pixel in the image, the steps of storing a portion of pixels, isolating a region (A,B,C,D,E,F,G,H,I) of the pixels including a central pixel (E), determining for said central pixel an array of symmetrically unique pixel positions (Z₁,Z₂,Z₃,Z₄) at a second magnified resolution, and determining a binary pixel state for each of said symmetrically unique pixel positions according to state determination rules. Included within the resolution conversion method are methods which tend to smooth transitional edges, compensate for the conversion of an image optimized for write-black printing system to a write-white printing system, and improve the rendition of graphics images and reverse printing.

## Description

The present invention generally relates to a system for converting bit-map images from a first resolution to a second resolution, particularly where the second resolution will be printed using a line-thinning printer technology. More specifically, the invention relates to improved techniques for reverse-printing and graphics rendition in bit-map image resolution conversion on a high resolution write-white printer.

It is a generally known requirement of certain computer graphic output devices to convert the resolution of digital input images prior to outputting them at a predefined output resolution (pixel density or raster density). Specifically, printer systems capable of printing image data and/or character data have become widely used. Furthermore, printer systems of this type currently provide high resolution, e.g., 24 spots per mm output capabilities which, in many cases, is higher than the input resolution available. This results in a situation where the performance of the printer may not be used to the maximum. For example, many existing input scanners and personal computer software packages operate at a medium image resolution of 12 spots per mm, resulting in either an incompatibility with higher resolution printers, or underutilization of the output capabilities of high resolution printers.

For these reasons, current technology is focused upon means for conversion of image data of one resolution to an image of a second resolution. It is a commonly known practice to implement this type of conversion through simple pixel and raster level operations, such as pixel doubling. Alternatively, more elaborate methods have been developed to facilitate this type of conversion.

Takano et al., US-A-4,632,579, discloses a method of increasing print resolution for a pin matrix printer by mechanically altering the relative position of the print head with respect to the paper during subsequent printing passes to increase the output resolution of the printer. Also disclosed is a means for controlling the activation of printing pins using a microprocessor based interpolation scheme to synthesize a secondary dot matrix pattern based upon a primary dot matrix pattern contained in memory for the associated character or pattern.

Nakajima et al., US-A-4,841,375, teaches an image resolution conversion apparatus for converting the pixel density of image data, comprising an input means for receiving image data, a selection means to determine the appropriate pixel-density conversion ratio, and a pixel-density converting means. The pixel-density converting means comprises, inter alia, a conversion-pixel density operating means for calculating a conversion-pixel density based on the input pixel data and a binary encoding means for subsequently applying a threshold to the conversion-pixel density value and generating a conversion-pixel binary output. Also disclosed is a threshold-value setting means which dynamically adjusts the threshold value to be applied within the binary encoding means on the basis of pattern detection applied to the original or reference image data.

Others have proposed template matching techniques for more precisely controlling the size, positioning and number of pixels that are printed on a xerographic photoreceptor to render bit-mapped images.

Walsh et al., US-A-4,437,122, describes a method of enhancing the resolution and quality of characters of a system receiving video display pixel information and providing hard copy output. The system accomplishes this by storing at least three successive lines of video data in successive parallel connected shift registers, applying the output of the shift registers to a decoder, and generating driving signals for a printer head. The decoder compares the pixels on the same line as well as in preceding and succeeding lines that surround each specific input pixel to generate the printer head driving signal according to whether straight or curved line segments are to be formed. Enhancement of the central pixel may be determined by progressively examining an ordered table of matches to find an equivalent image and its related enhancement.

A particular problem arises in the resolution conversion of bit-map images where the images have been previously optimized for a specific printing technology. "Write-black" refers to an electrophotographic printing process in which the portions of the image that will attract black toner for eventual transfer to a copy substrate are discharged with an exposure device, such as a laser. By contrast, "write-white" refers to an electrophotographic printing process in which the portions of the image that will not receive toner are discharged with an exposure device.

Thus, for example, images may be optimized for write-black printer technology, which tends to thicken lines because the optical input has a width greater than the pixel width, and subsequently transmitted to a write-white printer, which tends to thin lines because the discharged areas adjacent to lines areas spread into the domain of the line. Such images will appear undesirably lighter, because the correction for the expected write-black printer thins the lines in the image. When such a corrected image is sent instead to a write-white printer, the result will be lines that are too thin. Single pixel lines will tend to be invisible. Another effect that might be present in an optimized image might be halfbitting, which may not be required in a higher resolution image.

It is an object of this invention to convert bit-map images, originally generated at a first resolution and optimized for a particular printer technology, to a second resolution for a printer having different characteristics, providing controlled dilation, wherein the controls assist in retaining discernible features of fine lines and graphic images.

According to the invention, there is provided a method of converting the resolution of an image represented by a plurality of pixels from a first resolution to a second magnified resolution, comprising the steps of storing a portion of pixels representing an image portion in a first storage; isolating a region of the pixels of said image portion including a pixel formation comprising a central pixel and pixels surrounding said central pixel; expanding said central pixel into an array of symmetrically unique pixels at a second magnified resolution; and for each of said symmetrically unique pixel positions, determining a binary pixel state according to a set of state determination rules, said state determination rules being based on said pixel formation, and said state determination rules tending to favor a first state over a second state at portions of the image having a state transition if a control field of adjacent pixels including said central pixel in said formation are at a second state, producing controlled dilation of image fields at said first state.

There is thus provided a method for the conversion of binary image data originally generated at a first resolution, optimized for a particular printer technology, into representative binary image data at an integer-multiple higher resolution. Included within the resolution conversion algorithm are methods to correct the output for reproduction on a printer having different reproduction characteristics and methods to improve the rendition of graphics images and reverse printing.

A method of converting the resolution of an image from a first resolution to a second magnified resolution begins by storing a portion of the pixels representing a portion of the image, and isolating a region comprised of a central pixel and its surrounding pixels. An expanded array of symmetrically unique pixels is generated at the second resolution for the central pixel, and a set of state determination rules is used to determine the state of each of the symmetrically unique pixels in the magnified resolution array. The state determination rules are based on the formation of the pixels in the isolated region, and tend to favor a certain state if the formation of pixels in the isolated regions meets certain conditions.

In accordance with one aspect of the invention, there is provided a resolution conversion method which, in the process of conversion of binary image data originally generated at a lower resolution and optimized for a particular printer technology into representative binary image data at an integer-multiple higher resolution, provides an amount of line thickening, or "dilation," for correcting the bit-map for reproduction in a printer having line thinning characteristics. The method additionally contains controlling restrictions so that the discernible features of graphic images are preserved. The controlled dilation function may be performed by the application of state rules to the magnification process which tend to favor line thickening. The rules may be asymmetric about a magnified pixel. Restrictions to the magnification process are added to the rules to improve the rendition of shadows and reversed printing over previous methods.

A method in accordance with the invention will now be described, by way of example, with reference to the accompanying drawings, in which:-

Fig. 1 is an illustration of a representative portion of an input raster image.

Fig. 2 is a detailed illustration of a 2x4W magnification method of the present invention.

Figs. 3(a) and 3(b) are, respectively, an illustrative example of a portion of an input image, and the resultant 2x4W magnification of the image represented by Fig. 3(a) in accordance with the present invention.

Figs. 4(a) and 4(b) illustrate, respectively, another example of a portion of an input image, and the resultant 2x4W magnification of the image represented by Fig. 4(a) in accordance with the present invention.

Figs. 5(a), 5(b) and 5(c) illustrate, respectively, an example of a portion of an input image such as a portion of a bit-map graphic image, the resultant 2x magnification of the image represented by Fig. 5(a) in accordance with prior conversion methods, and the resultant 2x4W magnification of the image represented by Fig. 5(a) in accordance with the present invention.

Figs. 6(a), 6(b) and 6(c) illustrate, respectively, another example of a portion of an input image such as a reverse printing character, the resultant 2x magnification of the image represented by Fig. 6(a) in accordance with prior conversion methods, and the resultant 2x4W magnification of the image represented by Fig. 6(a) in accordance with the present invention.

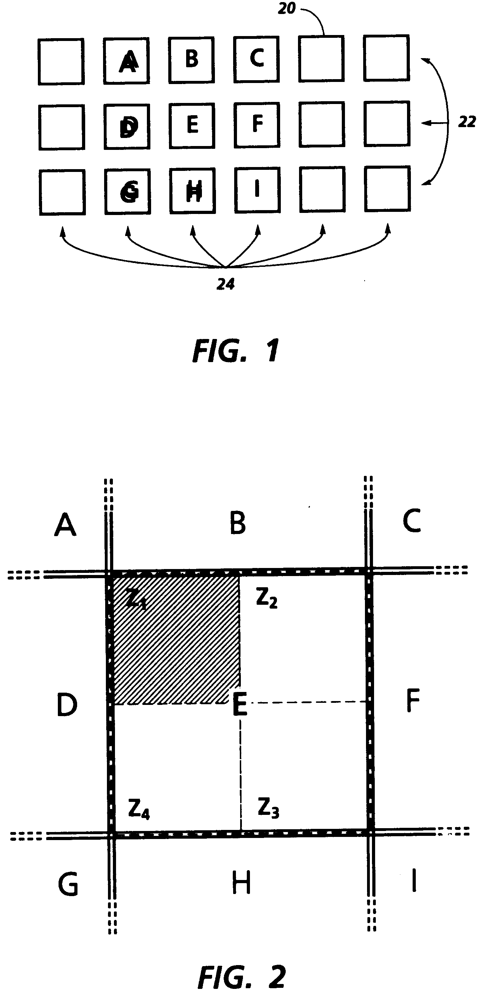

Referring now to the drawings, Fig. 1 shows a representative segment of image data. Specifically, the segment consists of a plurality of binary image pixel positions 20, generally arranged horizontally into rows or scan lines 22. In addition, pixels 20 are arranged vertically into columns of pixels 24 so as to form an addressable matrix of image pixels. Hereinafter, all references to the binary state of an image pixel are intended to imply a white or black condition of the pixel.

In accordance with the present invention, the magnification, or equivalently, the resolution conversion, of the image is implemented pixel by pixel, based upon neighboring image pixels. With reference to the 3-scan line by 3-pixel (3x3) array of original image pixels in Fig. 1, denoted alphabetically as pixels A through I, a center pixel E may be magnified by an integral multiple based upon the relative binary states of neighboring pixels A, B, C, D, F, G, H and I. The default binary state for the output pixel is determined by the binary state of the center pixel E. Alteration of the default state is based upon the binary states of neighboring pixels and the relationships between sub-groups of neighboring pixels, including the number and positions of black and white pixels. Definition of the 3x3 original image array allows the generation of specific rules which may be applied symmetrically to all pixels to be generated from center pixel E.

Fig. 2 depicts the center "parent" pixel E of Fig. 1, in an enlarged view with four symmetrically unique magnified output pixels Z₁, Z₂, Z₃, Z₄ superimposed to represent symmetrically unique magnification pixels of the output of a 2x4W magnification operation. Determination of the binary state of each of the symmetrically unique magnification pixels is made based on the binary state of original pixel E and the original surrounding pixels.

The 2x4W magnification state determination rules, as described below, are extensible to larger magnification levels. In the case of a 2x4W magnification, the rules require that if the center pixel being corrected is white, a "control field" of at least four adjacent pixels, including the center pixel, also be white for any of the magnified pixels Z_{1,} Z_{2,} Z_{3,} Z₄ to be made black. Obtaining black magnification pixels from a white parent pixel may effectively smooth edges or dilate a black field to compensate for write-white printing. Controlling the conditions necessary for dilation by requiring a control field of white pixels when two or more black fields are near each other, may effectively improve the rendition of small or thin white fields so that discernible fields of black or white pixels are effectively rendered in the magnified image. The rules also allow the magnification pixels for a black parent pixel to be made white where necessary to smooth edges.

For 2x4W magnification, the binary state of symmetrically unique output pixels Z₁, Z₂, Z₃, or Z₄ is made according to application of the following state determination rules:

For Z₁:
If pixels (A,B,C,D,F) are white and pixels (E,G,H,I) are black; or
if pixels (G,D,A,H,B) are white and pixels (E,I,F,C) are black; or
if pixels (I,H,G,F,D) are black and pixels (E,C,B,A) are white; or
if pixels (C,F,I,B,H) are black and (E,A,D,G) are white;
make output pixel (Z₁) white; or
if pixels (C,F,I,B,A) are black and (E,H,D,G) are white; or
if pixels (H,I,D,G) are black and (E,F,B,C) are white; or
if pixels (A,B,C,D,G) are black and (E,F,H,I) are white; or
if pixel (A) is black and (C,E,F,G,H,I) are white; or
if pixel (B) is black and (E,G,H,I) are white; or
if pixel (D) is black and (E,C,F,I) are white; or
if pixels (C,E,F,A,B) are white and (H,I,D,G) are black; or
if pixels (B,D,E,F,G,H,I) are white and (A,C) are black; or
if pixels (A,G) are black and (B,C,D,E,F,H,I) are white;
make output pixel (Z₁) black;
otherwise Z₁ = E.

For Z₂:
If pixels (C,F,I,B) are black and pixels (E,H,D,G) are white; or
if pixels (C,F,I,B,H) are black and pixels (E,A,D,G) are white; or
if pixels (A,B,C,D,G) are black and pixels (E,F,H,I) are white; or
if pixels (I,D,E,G,H) are white and pixels (A,B,F) are black; or
if pixels (A,D,E,G,H) are white and pixels (B,F,I) are black; or
if pixels (C,E,F,H,I) are white and pixels (A,B,D,G) are black; or
if pixels (C,E,F,H,I) are white and pixels (B,D,G) are black; or
if pixels (B,D,E,F,G,H,I) are white and pixels (A,C) are black; or
if pixel (B) is black and pixels (E,G,H,I) are white; or
if pixels (G,D,A,H,B) are black and pixels (E,I,F,C) are white; or
make output pixel (Z₂) black; or
if pixels (A,B,C,D,F) are white and pixels (E,G,H,I) are black; or
if pixels (G,D,A,H,B) are white and pixels (E,I,F,C)-are black;
make output pixel (Z₂) white;
otherwise Z₂ = E.

For Z₃:
If pixels (H,I,D,G) are black and pixels (E,F,B,C) are white; or
if pixels (E,F,G,H,I) are white and pixels (A,B,C,D) are black; or
if pixels (C,E,F,A,B) are white and pixels (H,I,D,G) are black; or
if pixels (G,D,A,H,B) are white and pixels (E,I,F,C) are black; or
if pixels (A,B,C,D,G) are black and pixels (E,F,H,I) are white; or
if pixels (I,H,G,F,D) are black and pixels (E,C,B,A) are white; or
if pixels (A,G) are black and pixels (B,C,D,E,F,H,I) are white; or
if pixel (D) is black and pixels (E,C,F,I) are white; or
if pixels (A,B,C,D,F) are black and pixels (E,G,H,I) are white;
make output pixel (Z₃) black;
otherwise Z₃ = E.

For Z₄:
If pixels (A,B,C,D,F) are black and pixels (E,G,H,I) are white;or
if pixels (I,H,G,F,D) are black and pixels (E,C,B,A) are white; or
if pixels (G,D,A,H,B) are black and pixels (E,I,F,C) are white; or
if pixels (C,F,I,B,H) are black and pixels (E,A,D,G) are white; or
if pixels (B,D) are black and pixels (I,E) are white, and (C,F) are white or (G,H) are white; or
if pixels (B,F) are black and pixels (D,E,G,H) are white, and (I) is white or (A) is white; or
if pixels (D,H) are black and pixels (E,C) are white, and (A,B) are white or (F,I) are white; or
if pixels (F,H) are black and pixels (EA) are white, and (D,G) are white or (F,I,B,C) are white;
make output pixel (Z₄) black;
otherwise Z₄ = E.

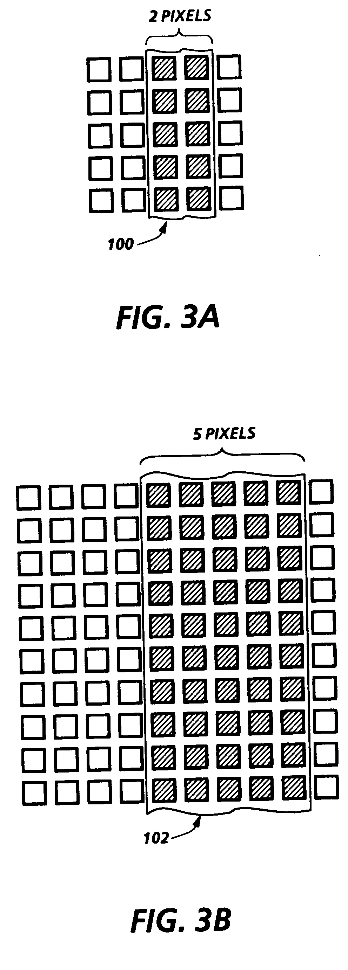

Referring now to Figs. 3(a) and 3(b), examples of input image and output images respectively, Fig. 3(a) is intended to depict a representative portion 100 of an input image, possibly a thin black vertical line extending beyond the edges of the sample. Fig. 3(b) depicts the resultant output image 102 after 2x4W magnification in accordance with the present invention. It will be noted that while a simple bit doubling routine commonly used for resolution conversion would have made the two-pixel-thick line four pixels thick, the inventive resolution conversion process takes into account thinning noted in the printing of images optimized for write-black processor to a write-white process, and thickens the image by an additional pixel width. While an image optimized for a write-black printer converted with a bit doubling process would tend to be washed out in appearance when printed on a write-white printer (because the printed lines are relatively thinner) the thickened lines resulting from the invention dilation process retain their dark appearance. The bit-map thickness is increased by about 25%, at least a portion of which increase compensates for the line thinning noted in the write-white printing.

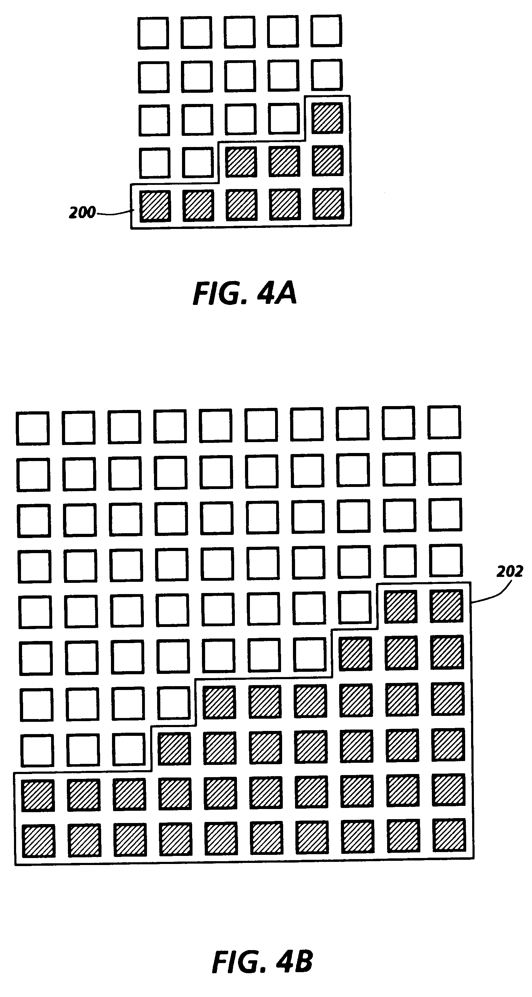

Figs. 4(a) and 4(b) together illustrate an example of the smoothing capabilities of the resolution conversion technique in accordance with the present invention at regions in an image having a state transition. Shaded pixels 200 form an angled edge at the black-to-white transition area. As described previously, resolution conversion of this type of an edge may result in the formation of "jaggies" along the edge if no smoothing is applied. The jaggies are the direct result of the magnification of the inherent step type representation of an angled edge. While it is not possible to completely remove the jaggies from the higher resolution image, the visual impact of the jaggies is reduced to a more acceptable level. Pixels 202 of Fig. 4(b) represent the converted output of the input image of Fig. 4(a), using a conversion factor of 2x4W in accordance with the present invention. The converted image portion will have some enhanced pixels filled in by black that would otherwise be white because the original parent pixel that was magnified was white. The resultant steps seen in the black-to-white transition of Fig. 4(b), while perceptible at the size presented, would be inherently less perceptible when produced at approximately one half of the present scale. In other words, if Fig. 4(b) had been produced at a 2x4W higher resolution in a such a manner so as to maintain the same size of the original image area of Fig. 4(a), the step height of the black-to-white transitional edge would be one half of that evident in the original image, Fig. 4(a). The effect is to smooth the state transition, or edge, between the black and white fields. Again, thickening of the black pixel field to compensate for write-white printing is also accomplished in the conversion.

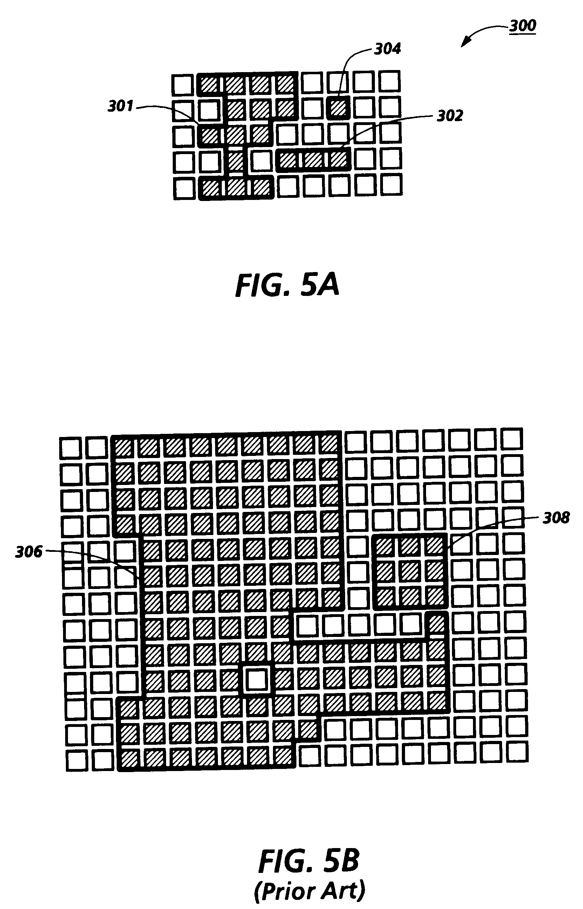

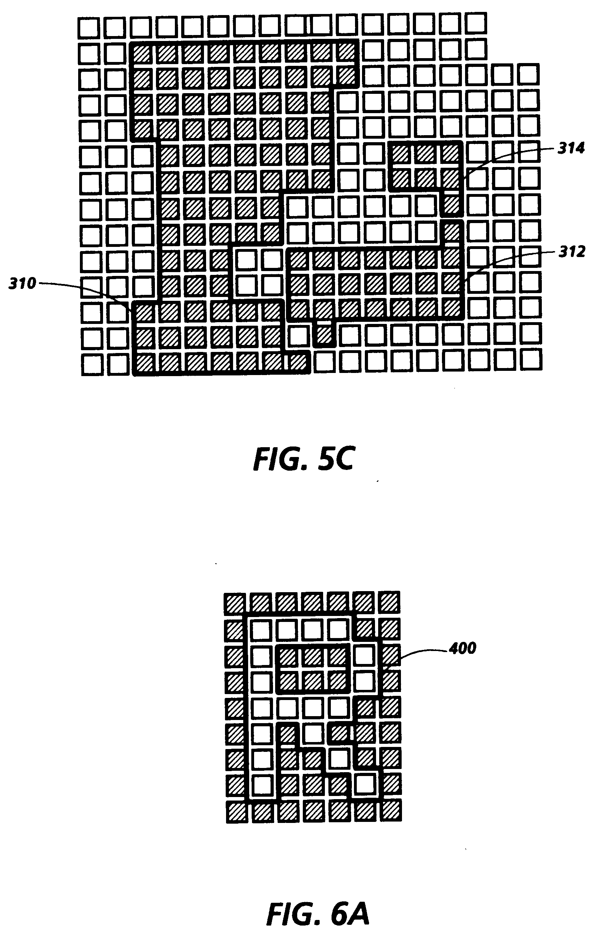

Figs. 5(a), 5(b) and 5(c) illustrate another feature of the invention. In Fig. 5(a) a portion of a bit-map 300 is shown. Shaded pixels form fields of black pixels 301, 302 and 304 in the bit-map. A configuration of black fields as shown in Fig. 5(a) might be found in a graphics image such as a half-tone image. Fig. 5(b) shows the converted output of the input image from 5(a) converted according to the 2x method. If Fig. 5(b) had been produced in such a manner so as to maintain the same size of the original image area of Fig. 5(a) at the resolution shown in Fig. 5(b), the shapes of the fields shown in Fig. 5(a) would be difficult to detect, and the single pixel separation of pixel field 308 from pixel field 306 would be obscured, so that the area would be observed as totally black.

Fig. 5(c) represents the converted output of the input image of Fig. 5(a) using 2x4W controlled dilation conversion in accordance with the present invention. By controlling the dilation of black fields which are near other black fields, the rendition of the shapes of black fields is improved. If Fig. 5(c) had been produced in such a manner so as to maintain the same size of the original image area of Fig. 5(a) at the resolution shown in Fig. 5(c), the shapes of fields 301, 302 and 304 shown in Fig. 5(a) would be discernible as fields 310, 312, and 314 in Fig. 5(c). Shadow rendition, for example, is improved by the method of the invention as shown.

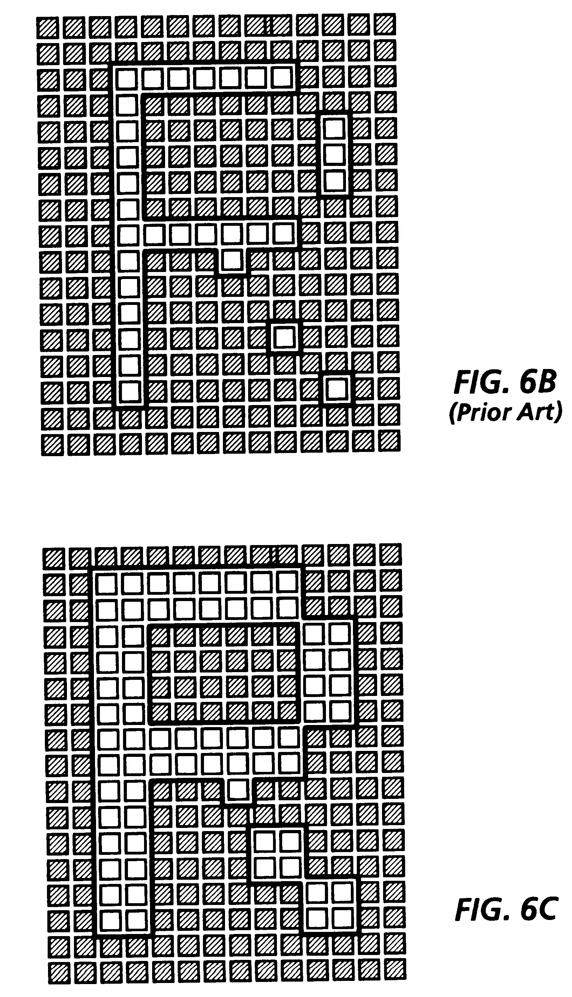

Figs. 6(a), 6(b), and 6(c) illustrate another example of the improved capabilities of the controlled resolution conversion technique in accordance with the present invention. In Fig. 6(a) a portion of a bit-map image 400 is shown. In this case, it is a character "R" in reverse printing -- that is, the background is black, and the character is white. Fig. 6(b) shows a reverse printing character converted according to the 2x method. The 2x method dilates black areas to compensate for write-white printing. If Fig. 6(b) had been produced in such a manner so as to maintain the same size of the original image area of Fig. 6(a) at the resolution shown in Fig. 6(b), the character "R" would tend to be undetectable due to so much of the character being filled in. This is a common problem with dilation methods.

Fig. 6(c) shows the same image 400 converted using 2x4W controlled dilation in accordance with the present invention. By controlling the dilation,which creates black magnification pixels for white parent pixels, recognizable characteristics of the character in reverse printing are preserved. If Fig. 6(c) had been produced in such a manner so as to maintain the same size of the original image area of Fig. 6(a) at the resolution shown in Fig. 6(c), the character "R" would still be distinguishable in reverse print.

The capability of the resolution conversion technique as demonstrated in the above description and related figures is therefore apparent. While the invention is defined in terms of two types of laser printers, it will no doubt be appreciated that other printing processes are well within the scope of the invention, where a first process might print a bit-map, optimized for printing in a second process, in a manner somewhat differently than the second process. Conversion of an image processed for a write-white printer for printing on a write-black printer, for example, is well within the scope of the invention.

Furthermore, the state determination rules may be tailored to meet the requirements of specific applications, thereby providing different capabilities as desired. Additionally, the 2x4W conversion example hereby presented should be understood to be extensible, using the same principles as described, to other integral levels of magnification. Finally, rotation of the rules by increments of 90° is well within the scope of the invention.

## Claims

1. A method of converting the resolution of an image represented by a plurality of pixels from a first resolution to a second magnified resolution, comprising the steps of:
storing a portion of pixels representing an image portion in a first storage;
isolating a region of the pixels of said image portion including a pixel formation comprising a central pixel (E) and pixels (A,B,C,D,F,G,H,I) surrounding said central pixel;
expanding said central pixel (E) into an array of symmetrically unique pixels (Z₁,Z₂,Z₃,Z₄) at a second magnified resolution; and
for each of said symmetrically unique pixel positions, determining a binary pixel state according to a set of state determination rules, said state determination rules being based on said pixel formation, and said state determination rules tending to favor a first state over a second state at portions of the image having a state transition if a control field of adjacent pixels including said central pixel in said formation are at a second state, producing controlled dilation of image fields at said first state.

2. The method of claim 1, wherein the step of isolating said region of image pixels further comprises isolating a 3-pixel by 3-pixel formation of image pixels including a central pixel (E) and pixels (A,B,C,D,F,G,H,I) surrounding said central pixel.

3. The method of claim 2, wherein said state determining rules tend to favor a first state over a second state if said control field comprises at least four adjacent pixels including said central pixel.

4. The method of any one of claims 1 to 3, wherein said first state is black, and said second state is white, said state determination rules tending to favor controlled dilation of black fields at said second magnified resolution.

5. The method of claim 1 wherein the step of determining a binary pixel state according to a set of state determination rules for each of said magnified image pixels (Z₁,Z₂,Z₃,Z₄) further comprises:
establishing the positional relationship of each of said magnified pixel positions;
determining which of said symmetrically unique magnified pixel positions is representative of each of said magnified pixel positions; and
selecting one of a plurality of unique sets of state determination rules which has been specifically established for said symmetrically unique pixel position.

6. The method of claim 1 including repeating, for each pixel in the image, the steps of storing a portion of pixels, isolating a region (A,B,C,D,E,F,G,H,I) of the pixels including a central pixel (E), determining for said central pixel an array of symmetrically unique pixel positions (Z₁,Z₂,Z₃,Z₄) at a second magnified resolution, and determining a binary pixel state for each of said symmetrically unique pixel positions according to state determination rules.

7. A method of converting the resolution of an image represented by a plurality of pixels from a first resolution to a second magnified resolution, comprising the steps of:
storing a portion of pixels representing an image portion in a first storage;
isolating a region of the pixels of said image portion including a pixel formation comprising a central pixel (E) and pixels (A,B,C,D,F,G,H,I) which are adjacent said central pixel;
expanding said central pixel into an array of symmetrically unique pixel positions Z₁, Z₂, Z₃, Z₄ at a second magnified resolution; and
for each of said symmetrically unique magnified pixel positions Z₁, Z₂, Z₃, Z₄, determining a binary pixel state according to a set of state determination rules, said state determination rules as follows:
for Z₁:
if pixels (A,B,C,D,F) are white and pixels (E,G,H,I) are black; or
if pixels (G,D,A,H,B) are white and pixels (E,I,F,C) are black; or
if pixels (I,H,G,F,D) are black and pixels (E,C,B,A) are white; or
if pixels (C,F,I,B,H) are black and (E,A,D,G) are white;
make output pixel (Z₁) white; or
if pixels (C,F,I,B,A) are black and (E,H,D,G) are white; or
if pixels (H,I,D,G) are black and (E,F,B,C) are white; or
if pixels (A,B,C,D,G) are black and (E,F,H,I) are white; or
if pixel (A) is black and (C,E,F,G,H,I) are white; or
if pixel (B) is black and (E,G,H,I) are white; or
if pixel (D) is black and (E,C,F,I) are white; or
if pixels (C,E,F,A,B) are white and (H,I,D,G) are black; or
if pixels (B,D,E,F,G,H,I) are white and (A,C) are black; or
if pixels (A,G) are black and (B,C,D,E,F,H,I) are white;
make output pixel (Z₁) black;
otherwise Z₁ = E;
for Z₂:
if pixels (C,F,I,B) are black and pixels (E,H,D,G) are white; or
if pixels (C,F,I,B,H) are black and pixels (E,A,D,G) are white; or
if pixels (A,B,C,D,G) are black and pixels (E,F,H,I) are white; or
if pixels (I,D,E,G,H) are white and pixels (A,B,F) are black; or
if pixels (A,D,E,G,H) are white and pixels (B,F,I) are black; or
if pixels (C,E,F,H,I) are white and pixels (A,B,D,G) are black; or
if pixels (C,E,F,H,I) are white and pixels (B,D,G) are black; or
if pixels (B,D,E,F,G,H,I) are white and pixels (A,C) are black; or
if pixel (B) is black and pixels (E,G,H,I) are white; or
if pixels (G,D,A,H,B) are black and pixels (E,I,F,C) are white;
make output pixel (Z₂) black; or
if pixels (A,B,C,D,F) are white and pixels (E,G,H,I) are black; or
if pixels (G,D,A,H,B) are white and pixels (E,I,F,C) are black;
make output pixel (Z₂) white;
otherwise Z₂ = E;
for Z₃:
if pixels (H,I,D,G) are black and pixels (E,F,B,C) are white; or
if pixels (E,F,G,H,I) are white and pixels (A,B,C,D) are black; or
if pixels (C,E,F,A,B) are white and pixels (H,I,D,G) are black; or
if pixels (G,D,A,H,B) are white and pixels (E,I,F,C) are black; or
if pixels (A,B,C,D,G) are black and pixels (E,F,H,I) are white; or
if pixels (I,H,G,F,D) are black and pixels (E,C,B,A) are white; or
if pixels (A,G) are black and pixels (B,C,D,E,F,H,I) are white; or
if pixel (D) is black and pixels (E,C,F,I) are white; or
if pixels (A,B,C,D,F) are black and pixels (E,G,H,I) are white;
make output pixel (Z₃) black;
otherwise Z₃ = E; and for Z₄:
if pixels (A,B,C,D,F) are black and pixels (E,G,H,I) are white; or
if pixels (I,H,G,F,D) are black and pixels (E,C,B,A) are white; or
if pixels (G,D,A,H,B) are black and pixels (E,I,F,C) are white; or
if pixels (C,F,I,B,H) are black and pixels (E,A,D,G) are white; or
if pixels (B,D) are black and pixels (I,E) are white, and (C,F) are white or (G,H) are white; or
if pixels (B,F) are black and pixels (D,E,G,H) are white, and (I) is white or (A) is white; or
if pixels (D,H) are black and pixels (E,C) are white, and (A,B ) are white or (F,I) are white; or
if pixels (F,H) are black and pixels (EA) are white, and (D,G ) are white or (F,I,B,C) are white;
make output pixel (Z₄) black;
otherwise Z₄ = E.
